Europäisches Patentamt

European Patent Office

Office européen des brevets

(11) Publication number: **0 372 534**
**A2**

# (12) EUROPEAN PATENT APPLICATION

(21) Application number: **89122514.6**

(22) Date of filing: **06.12.89**

(51) Int. Cl.⁵: **G06F 13/42**

(30) Priority: **07.12.88 JP 309366/88**

(43) Date of publication of application:
**13.06.90 Bulletin 90/24**

(84) Designated Contracting States:
**AT BE CH DE ES FR GB GR IT LI NL SE**

(71) Applicant: **OMRON CORPORATION**
**10, Tsuchido-cho, Hanazono, Ukyo-ku,**
**Kyoto-shi, Kyoto-fu(JP)**

(72) Inventor: **Komiya, Kazuhiko**
**3-10, Dobashi-cho**
**Takatsuki-shi Osaka(JP)**

(74) Representative: **Kahler, Kurt, Dipl.-Ing.**
**Gerberstrasse 3 Postfach 1249**
**D-8948 Mindelheim(DE)**

(54) **Data transmission system.**

(57) A data transmission system is used between information processing devices (1,2) with dissimilar processing speeds. In this system, the transmission and reception of data is carried out on a data unit-by-date unit basis. Every time a lower-speed device (2) completes processing of the data, a signal representing the completion of processing is transmitted back to a higher-speed device (1) and, then, the reception of the next data unit takes place. In this arrangement, the data transmission interval agrees with the processing cycle in the lower-speed device (2), thus making it unnecessary to pre-set an unnecessarily long transmission interval with a reserve.

FIG.1

## DATA TRANSMISSION SYSTEM

### Background of the Invention

### Field of the Invention

The present invention relates to a data transmission system which is of use between information processing devices with dissimilar processing speeds.

### Brief Description of the Related Art

One type of related data transmission system for the transmission and reception of BCD or other data between two information processing units, consists of a programmable controller (hereinafter referred to briefly as PC) and a control device, e.g. a peripheral temperature control device, which have dissimilar processing speeds. The PC, which has a higher processing speed, is used to control the overall transmission and reception of data in such a manner that the control device, which has a lower processing speed, may adequately perform data processing.

In such a system, it is essential to pre-set a transmission interval that is a little longer than actually required to take into consideration variation in the data processing time between the two devices. This practice not only leads to a decrease in overall transmission efficiency, but it also causes delays in the PC's execution of other processing routines.

### Objects and Summary of the Invention

It is an object of the present invention to provide a data transmission system which ensures a highly efficient data transmission between information processing devices with dissimilar processing speeds.

Other objects will become apparent as the following description proceeds.

The above-mentioned objects of the present invention are accomplished by a data transmission system which comprises a means for transmitting a signal from a high-speed information processing unit to a low-speed processing unit indicating that the high-speed unit is in standby condition for reception and processing of data from the low-speed unit; a means for transmitting a signal from the low-speed processing unit to the high-speed processing unit indicating that the low-speed unit is available for the reception and processing of data after the low-speed unit has received the signal representing a standby condition of the high-speed unit; a means for transmitting a write/read instruction signal from the high-speed unit after it has received a signal representing the availability of the low-speed unit; a means for executing a write/read routine for a data unit between the high-speed unit and low-speed unit upon transmission of said write/read instruction signal; and a means for indicating to the high-speed unit by the low-speed unit that it is available for the reception and processing of data at completion of the write/read processing routine for said data unit.

In the above arrangement between the two information processing devices with differing processing speeds, the transmission and reception of data is performed on a data unit-by-data unit basis. On completion of processing of each data unit in the low-speed device, a signal representing the completion of processing of that data is transmitted back to the high-speed device before the reception of the next data unit.

Since the interval of data transmission coincides with the actual processing time of the low-speed unit in this arrangement, it is no longer essential to set an unnecessarily long transmission interval including a reserve time. Thus, the overall efficiency of data transmission is increased.

As a further advantage, the time that can be assigned to execution of other processing routines in the high-speed unit is increased. Thus, the overall processing efficiency of the system is also improved.

### Brief Description of the Drawings

The above and other objects, advantages and features of this invention will be more fully understood when considered in conjunction with the accompanying drawings, in which:

Fig. 1 is a diagram showing signal line connections between a PC and a control device in accordance with the present invention;

Fig. 2 is a time chart for the write mode of the PC writing data into the control device; and

Fig. 3 is a timing chart for the read mode of the PC reading data from the control device.

Fig. 4 is a more detailed view of the system.

### Detailed Description of the Preferred Embodiments

A preferred embodiment of the present invention as applied to data transmission between a PC and a control device is described below, referring to the accompanying drawings.

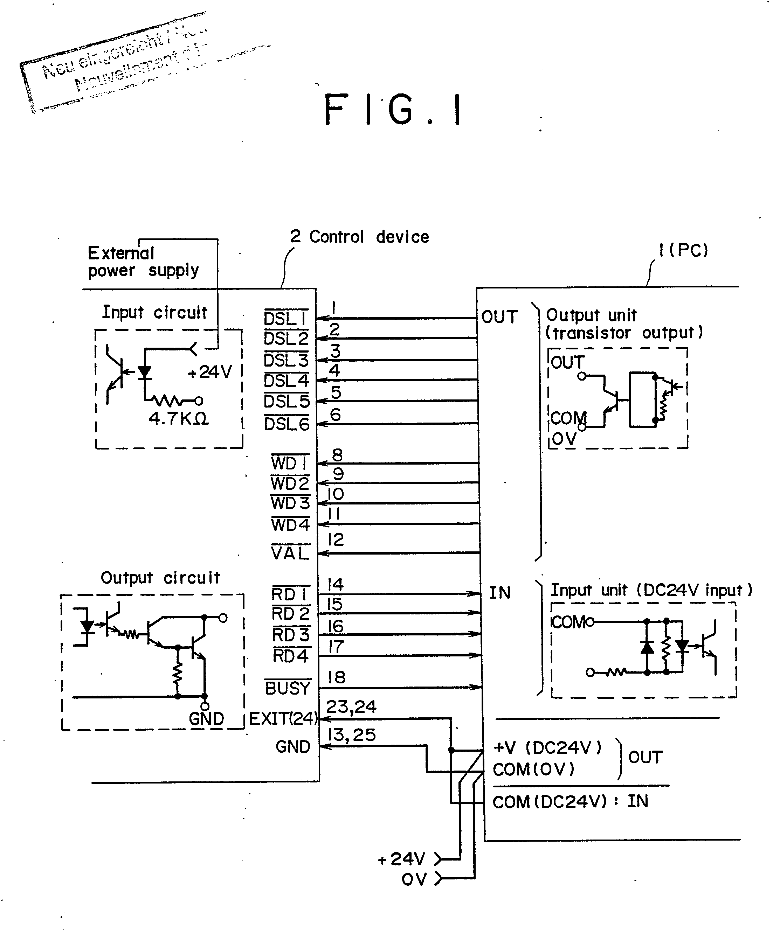

Fig. 1 is a diagram showing the signal line connections between the PC (1) and the control device (2) in accordance with the invention.

As illustrated, the lines extending from the output unit of the high-speed PC (1) to the input circuit of the low-speed control device (2) are DSL (data select code) signal lines 1-6, WD (write data) signal lines 1-4, and a VAL (board select) signal line. Connecting the output circuit of control device (2) and the input unit of PC (1) are RD (read data) signal lines 1-4 and a BUSY signal line.

As illustrated, the input and output units of PC (1) and control device (2), respectively, consist of photocouplers.

The role of each of the signals transmitted via the above-mentioned signal lines is discussed below.

While the VAL signal is transmitted from the PC (1) to the control device (2), the PC (1) is available for the transmission and reception of data to and from the control device (2).

While the BUSY signal is transmitted from control device (2) to PC (1), the control device (2) is involved in processing data and is not available for the reception and transmission of the next unit of data until the particular processing is completed.

The DSL signals 1-6 transmitted from the PC (1) designates the control device (2) to write or read.

The WD signals 1-4 represent the write data designated by DSL signals 1-6 from the control device (2) to the PC (1).

The RD signals 1-4 represent the read data designated by DSL signal 1-6 from the PC (1) to control device (2). The data transmitted and received between them as WD and RD signals are BCD data in this embodiment. It should be noted that signal types and polarities are given for illustration and not by way of limitation, as any suitable signal types and polarities can be used. It should further be noted that although illustrated for two processing units, the invention can be employed by a plurality of such units exchanging information.

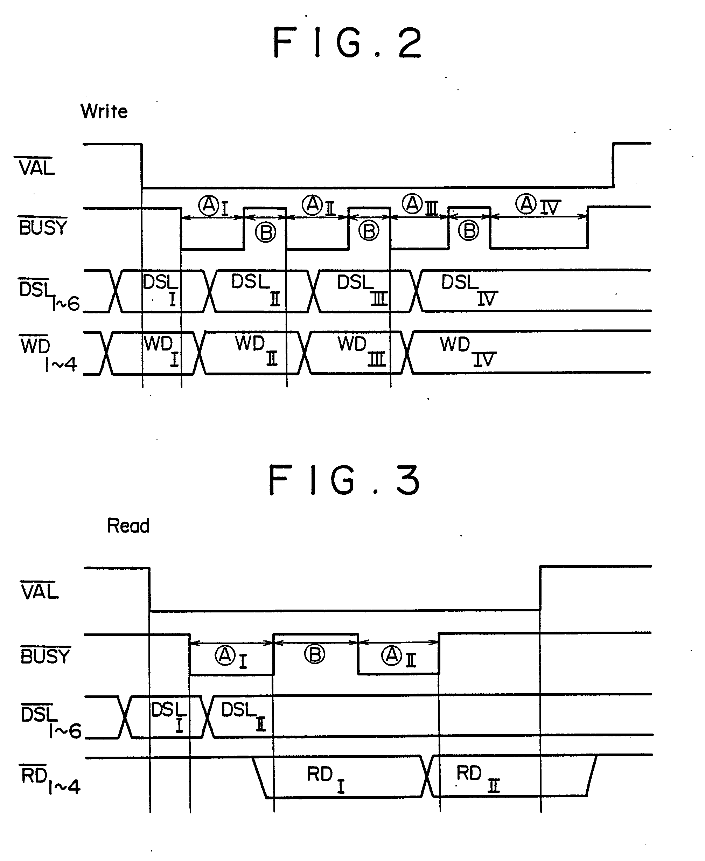

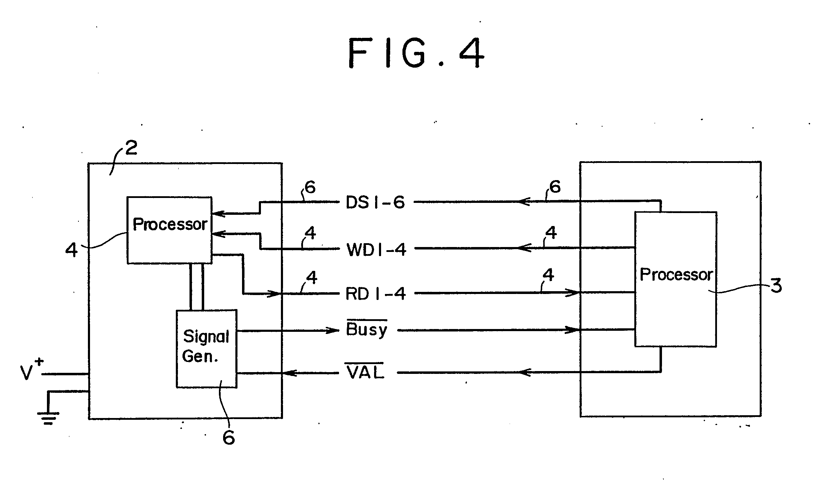

Fig. 2 is a time chart illustrating the writing of data from the PC (1) into the control device (2). Fig. 4 shows the overall design of the system.

A VAL signal indicating the start of data write is transmitted from PC (1). Prior to the transmitting this VAL signal, DSL I data indicating the content, such as the type of the leading bit, of write data, has been provided to DSL signal lines 1-6, for example, by processor 3. Similarly, WD I, indicating the content of the leading bit of data to be actually written, has been provided to WD signal lines 1-4, for example, by processor 3. The control device (2) upon detecting a transition to a logical low of the VAL signal, takes in these data from the WD and DSL signal lines and starts internal processing, for example, using processor 4. At the same time, signal generating means 6 of control device (2) outputs a BUSY signal. It should be noted that signal generating means 6 may be incorporated into processor 4. Processors 3 and 4 can be used to execute the write/read routines. No limitations on the invention from the construction and function of these processors should be inferred, since any suitable processing means may be employed.

When the BUSY signal output indicates a busy condition, that is to say during a logical low of the BUSY signal, the transmission and reception of data by the PC (1) is inhibited. Then, after lapse of processing time A I, i.e. upon completion of processing of input data in the control device (2) the BUSY signal ceases to indicate a busy condition and the logical high resumes.

When the BUSY signal, which has ceased to indicate a busy condition, is received from the control device (2), PC(1) outputs the next DSL II and WD II data to the respective signal lines and stands by for transmission of the next data.

The transition of BUSY signal to the logical high enables the transmission and reception of data so that processing of the next DSL II and WD II data is started. When the control device (2) detects this data, the BUSY signal again transitions to a logical low. Thus, in Figure 2, the time B from the low-high to high-low transition of BUSY signal represents a delay in processing within the PC (1) and is preferably as short as possible.

In the same manner as above, the data write at the PC (1) shifts to the next unit of data only after lapse of the respective processing times, A I to A IV, for write data, WD I - WD IV, in the control device (2). Therefore, the transmission and reception of data is controlled in conformity with the lower processing speed of control device (2). The serial 4-bit data, up to DSL IV and WD IV, are thus input and the VAL signal then transitions to a logical high again, completing the data write mode from the PC (1) to the control device (2).

Fig. 3 shows a timing chart for the PC (1) reading data from the control device (2).

For reading, RD signal lines 1-4 are used for the transmission of data. Data reading is performed at the time of return of the BUSY signal to a logical high.

Otherwise, processing is similar to that of writing as illustrated in Figs. 2 and 3. Where the control device is a temperature control device, the minimum values on the writing mode are about 40 ms for A I to A III, about 50 ms for A IV, and the minimum value on the reading mode for A I - A IV is about 30 ms for both writing and reading.

Thus, in the above embodiment, the write and read of data between the PC (1) and the control device (2) is started after transmission of a VAL signal indicating the transmission of data from the PC (1) to the control device (2). The data write/read between the PC (1) and control device (2) is then executed on a data unit by data unit, such as a bit-by-bit, basis, i.e. in a minimum unit of data transmission. Confirmation of the completion of processing is accomplished by detecting a leading edge of the BUSY signal as it transitions. After confirmation of completion of the processing of each data unit or bit, the write/read of the next data unit or bit is initiated. Therefore, the transmission of data is performed in agreement with the slower processing rate of control device (2), without further delay. Thus, the highest possible processing efficiency between the two processing units is achieved.

It is particularly noteworthy that even if the write/read processing time per data unit or bit varies at the control device (2), the transmission of data is performed in conformity with the respective processing times. The processing efficiency of the PC (1) is improved by the abolishment of the reserve time over the transmission interval which was necessary in the related art system. Thus, the overall processing time of the system as a whole is reduced.

The above description and accompanying drawings are merely illustrative of the application of the principles of the present invention and are not limiting. Numerous other arrangements which embody the principles of the invention and which fall within its spirit and scope may be readily devised by those skilled in the art. Accordingly, the invention is not limited by the foregoing description, but is only limited by the scope of the appended claims.

**Claims**

1. A method of data transmission between information processing devices having dissimilar processing speeds comprising:
- transmitting data between a high-speed processing device (1) and at least one low-speed processing device (2);
- signalling by a first signal (VAL) a standby condition of said high-speed device (1) to said at least one low-speed device (2), said standby condition being a condition for said high-speed device (1) to transmit or receive data; and
- inhibiting data transmission to said at least one low-speed device (2) while the latter is processing individual data units received from said high-speed unit (1) or is processing individual data units for transmission to said high-speed device (1).

2. The method of claim 1 wherein the step of inhibiting data transmission between said processing devices (1,2) further comprises:
- generating a second signal (BUSY) for transmission to said high-speed device (1) when said at least one low-speed device (2) is processing data and is unable to communicate with said high-speed device (1); and
- deactivating said second signal (BUSY) when said low-speed device (2) is not processing data and is able to communicate with said high-speed device (1), said low-speed device (2) thereby controlling data transmissions between said high-speed device (1) and said at least one low-speed device (2).

3. The method of claim 1 or 2 further comprising:
- transmitting a write/read instruction signal (WD;RD) from said high-speed device (1) to a said at least one low-speed device (2) after deactivating the inhibition of data transmission; and
- executing a write/read routine for each individual data unit transmitted between said high-speed device (1) and said low-speed device (2) upon transmission of said write/read instruction signal (WD;RD).

4. The method of claim 3, wherein said second signal is set to one logical condition inhibiting transmission of data between said processing devices (1,2) during execution of said write/read routine and said second signal is set to a different logical condition indicating to said high-speed device (1) from said low-speed device (2) that said low-speed device (2) is available for the reception and processing of data upon completion of said write/read routine for said individual data unit.

5. The method of claim 3 or 4, wherein said write/read routine is executed as controlled by a processing rate of said low-speed device (2).

6. The method of claim 3, 4 or 5, wherein said write/read routine is executed on individual data units, each data unit being supplied at discrete times.

7. A data transmission system for use between information processing devices with dissimilar processing speeds comprising:
- means for transmitting data between a high-speed processing device (1) and at least one low-speed processing device (2);
- means for signalling by a first signal (VAL) a standby condition of said high-speed device (1) to said low-speed devices (2), said standby condition being a condition for said high-speed device (1) to transmit or receive data; and
- means for inhibiting data transmission to said at least one low-speed device (2) while the latter is processing individual data units received from said high-speed unit (1) or is processing individual data units for transmission to said high-speed device (1).

8. The system of claim 7 further comprising: means (6) for generating a second signal (BUSY) for transmission to said high-speed device (1) when said at least one low-speed device (2) is processing data and is unable to communicate with said high-speed device (1), said second signal (BUSY) being deactivated when said low-speed device (2) is not processing data and is able to communicate with said high speed device (1), said low speed device (2) thereby controlling data transmissions between said high-speed device (1) and said one low-speed device (2).

9. The system of claim 7 or 8 further comprising:
- means for transmitting a write/read instruction signal (WD;RD) from said high-speed device (1) to a said at least one low-speed device (2) after deactivating the inhibition of data transmission; and
- means for executing a write/read routine for each individual data unit transmitted between said high-speed device (1) and said low-speed device (2) upon transmission of said write/read instruction signal; and
- signal generating means (4,6) in each of said low-speed devices for generating said second signal (BUSY), which is set to one logical condition inhibiting transmission of data between said processing devices (1,2) during execution of said write/read routine and to a different logical condition indicating to said high-speed device (1) from said low-speed device (2) that said low-speed device (2) is available for the reception and processing of data upon completion of said write/read routine for said individual data unit.

10. The system of any of claims 7 to 9, wherein said write/read routine is executed as controlled by a processing rate of said low-speed device (2).

11. The system of any of the claims 7 to 10, wherein said write/read routine is executed on individual data units, e. g. on a bit-by-bit basis, each data unit being supplied at discrete times.

# F I G . I

2 Control device

I (PC)

External power supply

Input circuit

+24V
4.7KΩ

Output circuit

GND

DSL1 — 1
DSL2 — 2
DSL3 — 3
DSL4 — 4
DSL5 — 5
DSL6 — 6

WD1 — 8
WD2 — 9
WD3 — 10
WD4 — 11
VAL — 12

RD1 — 14
RD2 — 15
RD3 — 16
RD4 — 17
BUSY — 18
EXIT(24) — 23,24
GND — 13,25

OUT — Output unit (transistor output)

OUT
COM
OV

IN — Input unit (DC24V input)

COM

+V (DC24V)
COM(OV) } OUT

COM(DC24V) : IN

+24V
OV

OM 19079 EP Patentanwälte Kahler & Käck 14. Dezember 1989

# F I G . 2

Write

# F I G . 3

Read

# FIG.4